## Europäisches Patentamt
## European Patent Office
## Office européen des brevets

(11) Numéro de publication: **0 032 075**

**A1**

# DEMANDE DE BREVET EUROPEEN

(21) Numéro de dépôt: **80401741.6**

(22) Date de dépôt: **05.12.80**

(51) Int. Cl.³: **G 06 F 13/00**

(30) Priorité: **20.12.79 FR 7931287**

(43) Date de publication de la demande:
**15.07.81 Bulletin 81/28**

(84) Etats contractants désignés:
**BE DE NL**

(71) Demandeur: **COMPAGNIE INTERNATIONALE POUR L'INFORMATIQUE CII - HONEYWELL BULL (dite CII-HB) 94, avenue Gambetta F-75020 Paris(FR)**

(72) Inventeur: **Cohen, Violette CII HONEYWELL BULL 94 avenue Gambetta F-75020 Paris(FR)**

(72) Inventeur: **Levieux, Philippe Louis Prosper CII HONEYWELL BULL 94 avenue Gambetta F-75020 Paris(FR)**

(74) Mandataire: **Denis, Hervé COMPAGNIE INTERNATIONALE POUR L'IMFORMATIQUE CII-HONEYWELL BULL 94, avenue Gambetta F-75960 Paris Cedex 20(FR)**

(54) Dispositif d'adressage d'éléments d'informations dans une table à plusieurs entrées, enregistrée dans une mémoire.

(57) L'invention concerne un dispositif d'adressage d'éléments d'informations dans une table à plusieurs entrées, enregistrée dans un mémoire M. Ce dispositif est caractérisé en ce qu'il comprend des moyens d'enregistrement (J, TIDX) de pointeur (PTR), de taille (TBSZ) et de rang $i$ de l'entrée contenant l'élément (E) à adresser par rapport à une entrée de référence (TR), des moyens d'enregistrement (TPA,RD) qui permettent de sélectionner (J et TIDX) et, des moyens pour adresser l'élément (E) à partir de l'entrée de référence (TR), de la taille $t$ de l'entrée contenant l'élément (E), du rang $i$ de cette entrée par rapport à l'entrée de référence (TR) et de la position $d$ de l'élément (E) par rapport au début de l'entrée qui contient cet élément.

Application aux unités de traitement de l'information et notamment à l'adressage d'éléments d'informations situés dans des tables contenues dans la mémoire centrale de ces unités de traitement.

EP 0 032 075 A1

./...

"DISPOSITIF D'ADRESSAGE D'ELEMENTS D'INFORMATIONS DANS UNE TABLE A PLUSIEURS ENTREES, ENREGISTREE DANS UNE MEMOIRE"

La présente invention concerne un dispositif d'adressage d'éléments d'informations dans une table à plusieurs entrées, enregistrée dans une mémoire. Cette invention s'applique aux unités de traitement de l'information et plus particulièrement à l'adressage d'éléments d'informations situés dans des tables contenues dans la mémoire centrale de ces unités de traitement.

On sait qu'une table rangée dans une mémoire établit une correspondance entre les informations que l'on recherche et des informations d'entrée qui permettent de trouver ces informations recherchées. Généralement, pour rechercher les informations contenues dans une table inscrite dans une mémoire, il est nécessaire de disposer d'un "pointeur" qui décrit successivement les adresses des entrées en regard desquelles sont rangées des informations. Actuellement, les dispositifs connus qui permettent d'accéder à des informations complexes contenues dans une table enregistrée dans une mémoire n'interviennent qu'après traitement logiciel ou micrologiciel important ; dans la plupart des cas, il est nécessaire que l'opérateur indique, dans une instruction d'accès à un élément d'informations contenu dans une table, un grand nombre de paramètres pour permettre cet accès.

Les dispositifs connus ont donc pour inconvénient subséquent d'accaparer un "temps machine" important, ce qui entraîne une diminution des performances des unités de traitement de l'information utilisant ces dispositifs.

L'invention a pour but de remédier à ces inconvénients et notamment de réaliser un dispositif d'adressage d'éléments d'informations dans une table à plusieurs entrées, enregistrée dans une mémoire évitant un traitement

logiciel ou micrologiciel important et entraînant ainsi un gain de temps substantiel dans l'accès à des éléments d'informations complexes contenus dans une table à plusieurs cellules, dites entrées.

L'invention a pour objet un dispositif d'adressage d'éléments d'informations dans une table à plusieurs entrées, enregistrée dans une mémoire (M), caractérisé en ce qu'il comprend des moyens d'enregistrement (J) de pointeurs (PTR) désignant des entrées de référence (TR) de la table (T) et d'enregistrement (TBSZ) de la taille $t$ représentant le nombre de multiplets d'informations enregistrés en regard de chaque entrée de la table, des moyens d'enregistrement (TIDX) du rang $i$ qu'occupe l'entrée contenant l'élément (E) à adresser par rapport à une entrée de référence (TR), $i$ et $t$ étant des entiers, des moyens d'enregistrement (TPA, RD), permettant de sélectionner d'une part les moyens d'enregistrement (J) des pointeurs (PTR) et de la taille $t$ (PTR, TBSZ) et d'autre part les moyens d'enregistrement (TIDX) du rang $i$ de l'entrée à adresser par rapport à l'entrée de référence (TR), et des moyens pour adresser ledit élément (E) à partir de l'entrée de référence (TR), de la taille $t$, du rang $i$ et de la valeur de la position $d$ dudit élément par rapport au début de l'entrée contenant ledit élément, la valeur de la position $d$ provenant d'un mot de microprogramme contenu dans les moyens d'enregistrement (RD) qui permettent de sélectionner les moyens d'enregistrement (TIDX) du rang $i$ de l'entrée à adresser.

Selon une autre caractéristique de l'invention, les moyens pour adresser ledit élément (E) comprennent un circuit multiplieur (2) dont les entrées sont reliées à des sorties des moyens d'enregistrement (J - TBSZ) de la taille $t$ des entrées de la table, à des sorties des moyens d'enregistrement (TIDX) du rang $i$ de l'entrée contenant l'élément à adresser et à des sorties des moyens d'enregistrement (RD) de la position $d$ ; un circuit additionneur (6) dont les entrées sont connectées à des sorties du circuit multiplieur (2) et à des sorties des moyens d'enregistrement (J) du pointeur sur l'entrée de référence (TR) de la table (T), et un registre (RA) d'adresses réelles dont les entrées sont reliées aux sorties du circuit additonneur (6) et dont les sorties commandent un circuit (7) d'adressage de la mémoire.

Selon une autre caractéristique, les moyens d'enregistrement (TIDX,J) du rang $i$ et de la taille $t$ sont constitués par des registres binaires.

Selon une caractéristique avantageuse, la taille $t$ des entrées de la table étant de forme $t = 2^n$, $n$ désignant un nombre entier fixe pour une table donnée, le circuit multiplieur est un circuit décaleur apte à décaler de $n$ rangs vers la gauche le contenu du registre contenant sous forme binaire la valeur du rang $i$ de l'entrée correspondant à l'élément à adresser, de manière à former le produit $i \times t$, puis à additionner à ce produit, la valeur de la position $d$.

Selon une autre caractéristique, le dispositif comprend en outre un registre d'adresses de limites de zones de mémoire, chaque élément à adresser occupant dans la mémoire une position relative prédéterminée par rapport à une limite de la zone dans laquelle il est inscrit, et un comparateur à seuil pour comparer le contenu du registre d'adresses réelles avec le contenu du registre d'adresses de limites de zones, ce comparateur recevant en outre, en provenance des moyens d'enregistrement, des informations binaires concernant la position relative de l'élément dans la table par rapport à la limite de la zone de mémoire dans laquelle il est inscrit, de sorte qu'un signal d'erreur apparaisse en sortie de ce comparateur lorsque la différence entre l'adresse réelle de l'élément de la table et l'adresse de limite de zone ne correspond pas aux informations concernant la position relative de l'élément par rapport à la limite de zone de mémoire dans laquelle il est inscrit.

Selon une autre caractéristique, les registres des moyens d'enregistrement contenant les valeurs binaires représentatives de la taille $t$ de chaque entrée contiennent en outre des valeurs binaires représentatives du nombre maximal d'entrées de la table, un autre comparateur à seuil étant relié par ses entrées, d'une part aux sorties de ces registres et, d'autre part, aux sorties de registres des moyens d'enregistrement (TIDX) qui contiennent les valeurs binaires représentatives du rang $i$, de sorte qu'un signal d'erreur apparaisse en sortie du comparateur lorsque la valeur du rang $i$ dépasse le nombre maximal d'entrées de la table.

Selon une autre caractéristique, les informations binaires concernant la position relative de la table par rapport à la limite de la zone de la mémoire dans laquelle elle est inscrite sont enregistrées dans les registres des moyens d'enregistrement contenant les valeurs binaires représentatives de la taille des entrées de la table.

Enfin, le dispositif de l'invention s'applique à l'adressage d'éléments dans des tables contenues dans la mémoire centrale d'une unité de traitement de l'information.

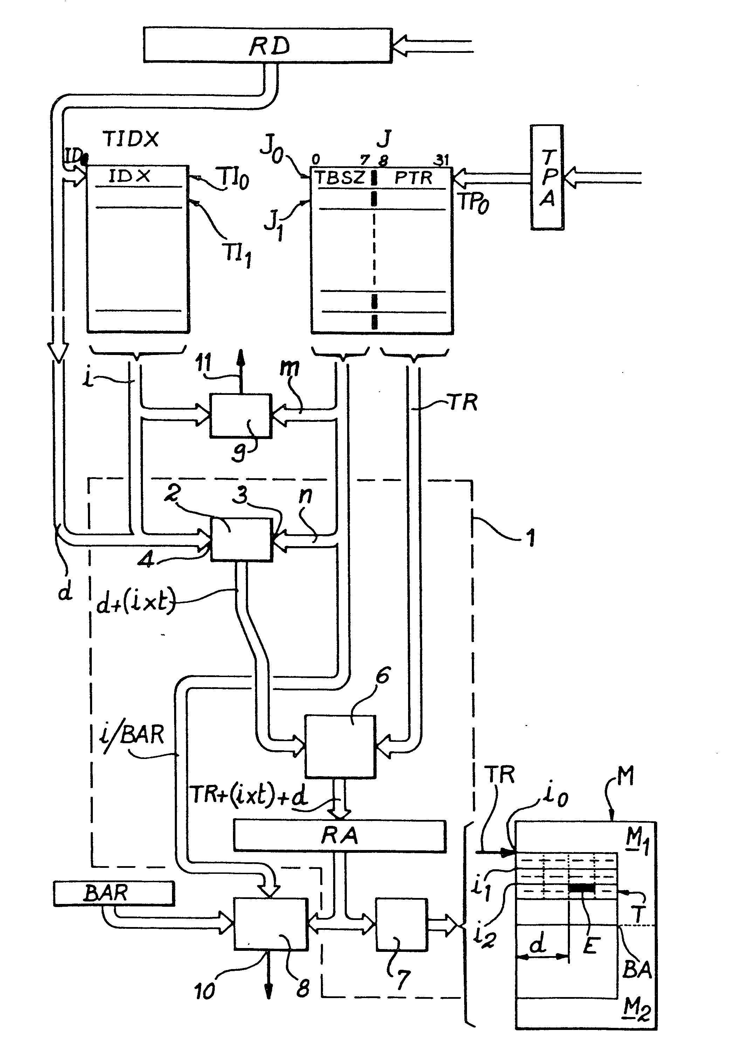

D'autres caractéristiques et avantages de l'invention ressortiront encore de la description qui va suivre, donnée en référence à la figure annexée qui représente schématiquement un dispositif conforme à l'invention.

La figure représente schématiquement un dispositif conforme à l'invention pour l'adressage d'éléments d'informations tels que l'élément E, dans une table T à plusieurs entrées $i_0$, $i_1$, $i_2$, etc..., enregistrée dans une mémoire M qui peut être la mémoire centrale d'une unité de traitement de l'information. La table T contient, par exemple, des microinstructions ; elle occupe dans la mémoire une position relative prédéterminée par rapport à une limite BA de zones $M_1$, $M_2$ de cette mémoire ; cette limite fixe, par exemple, la délimitation de la mémoire en deux zones $M_1$, $M_2$, la zone $M_1$ pouvant être réservée à la mémorisation de micro-instructions tandis que la zone $M_2$ peut être réservée à la mémorisation d'instructions. En regard de chacune des entrées $i_0$, $i_1$, $i_2$... de la table T sont enregistrés des multiplets d'informations. La zone $M_1$ contient des informations qui sont visibles uniquement du micrologiciel, tandis que la zone $M_2$ contient des informations visibles à la fois du logiciel et du micrologiciel. Le contrôle de limite, qui, comme on le verra plus loin, est réalisé grâce au dispositif de l'invention, a pour but d'interdire au logiciel d'accéder aux informations de la zone $M_1$, auxquelles il ne doit pas avoir accès.

Dans l'exemple représenté sur la figure, on a supposé qu'en regard de chacune des entrées sont enregistrés 8 multiplets d'informations, chaque multiplet étant formé, par exemple, d'un octet ; l'élément E que l'on désire adresser est situé dans l'octet de rang 2 de la troisième entrée $i_2$, c'est-à-dire dans l'octet de rang 18 par rapport au début de l'entrée de référence TR, si l'on considère que le premier octet situé dans la première entrée de la table occupe le rang zéro.

Il est bien évident que le multiplet choisi pour l'exemple considéré est un octet, c'est-à-dire un ensemble de 8 éléments binaires ou bits, mais ce multiplet pourrait désigner un ensemble comportant un nombre différent de bits. La table ainsi définie par ses entrées est aussi définie par la taille $t$ de ses entrées. La taille $t$ d'une entrée désigne le nombre de multiplets contenus dans chaque entrée.

Le dispositif de l'invention permet, grâce à des informations contenues dans une instruction ou une microinstruction d'entrée, de repérer l'élément d'information E situé en regard de l'entrée $i_2$ et occupant la position $d$ ou "offset", par rapport au début de cette entrée. $d$ indique le déplacement en multiplets, (en octets dans l'exemple choisi) par rapport au début de l'entrée considérée. L'élément E peut être par exemple un octet dans l'entrée de 8 octets. Le repérage de l'élément E dans la table T, s'opère à partir de moyens d'enregistrement constitués par deux registres RD et TPA qui sont chargés respectivement par un mot de microprogramme provenant du logiciel et par un mot de microprogramme ou des informations, provenant d'un BUS de l'unité de traitement qui utilise le dispositif. Le mot de microprogramme ou les informations contenues dans le registre TPA permettent de sélectionner des moyens d'enregistrement J de pointeurs et de tailles d'entrées, relatifs à la table T. Les moyens d'enregistrement J sont constitués par un banc ou table de registres $J_0$, $J_1$,... chargés à l'initialisation du dispositif et qui sont qualifiés de registres de pointage et de dimensions de table.

Le mot de microprogramme enregistré dans le registre RD permet de sélectionner des moyens d'enregistrement TIDX constitués par un banc ou table de registres $TI_0$, $TI_1$,... qualifiés de registres d'indexation, chargés à l'initialisation du dispositif. Les registres RD et TPA permettent, grâce aux informations qu'ils contiennent, d'adresser l'élément E dans la table T. Les registres $J_0$, $J_1$,... contiennent des informations PTR de pointage d'une entrée de référence TR de la table T et des informations TBSZ concernant notamment la taille $t$ des entrées de la table. Cette taille $t$ est exprimée sous la forme $t = 2^n$ et représente le nombre d'octets d'informations enregistrés en regard de chaque entrée.

Dans l'exemple décrit, le registre $J_0$, pointé grâce aux informations TPO, contient donc des informations PTR qui vont permettre de pointer une entrée de référence TR de la table T (correspondant à l'entrée $i_0$ de rang $i = 0$ par exemple) et des informations TBSZ qui concernent plus particulièrement la taille $t$ des entrées de la table ; dans l'exemple considéré $t = 2^3$ .

Le registre $J_0$ contient également des informations concernant la position relative de l'élément E par rapport à la limite BA des zones $M_1$ et $M_2$ de la mémoire M, et des informations représentatives du nombre maximal $m$ d'entrées de la table T. Les registres de la table TIDX contiennent des informations IDX concernant le rang $i$ de l'entrée contenant l'élément à adresser ; ce rang est qualifié d'index et permet l'adressage de l'entrée considérée en prenant pour adresse de référence ou adresse de base, celle de l'entrée de référence TR pointée, grâce à certaines des informations PTR du registre $J_0$, dans l'exemple considéré.

Les registres J et TIDX peuvent être qualifiés respectivement de registre descripteur de table et de registre d'indexation de l'entrée dans la table. La valeur du décalage $d$ ou offset de l'élément E à adresser, par rapport au début de l'entrée considérée, est fournie par les informations contenus dans le mot de microprogramme enregistré dans la mémoire RD.

Enfin le dispositif de l'invention comprend des moyens 1 pour adresser l'élément E, à partir de l'entrée de référence TR, de la taille $t = 2^n$ de l'entrée contenant l'élément à adresser, du rang $i$ de cette entrée par rapport à l'entrée de référence, et de la position $d$ ou offset de l'élément E, par rapport au début de l'entrée dans laquelle est contenue cet élément. Les moyens 1 d'adressage de l'élément E comprennent un circuit multiplieur 2 dont les entrées 3 sont reliées aux sorties de la table J dans laquelle le registre $J_0$ par exemple, contient les informations TBSZ concernant la taille $t$ des entrées de la table T. Les entrées 4 du circuit multiplieur 2, sont reliées aux sorties de la table TIDX dans laquelle le registre $TI_0$ contient les informations IDX concernant le rang de l'entrée qui contient l'élément E à adresser par rapport à l'entrée de référence TR.

Dans l'exemple considéré, le rang $i$ de l'entrée $i_2$, par rapport à l'entrée de référence TR, est égal à 2, si l'on considère que la première entrée $i_0$ a pour rang 0.

Comme indiqué plus haut, huit octets sont enregistrés en regard de chaque entrée et la taille $t$ des entrées de la table T est donc égale à $2^3$. Le circuit multiplieur 2 reçoit en outre, la valeur du décalage ou offset $d$. On obtient de manière connue, en sortie de ce multiplieur, des informations binaires concernant la somme $(i \times t) + d$.

Les moyens 1 d'adressage de l'élément E comprennent également un circuit additionneur 6, dont les entrées sont connectées, d'une part, aux sorties du circuit multiplieur 2 et, d'autre part, aux sorties de la table J dans laquelle le registre $J_0$ sélectionné contient les informations PTR de pointage de l'entrée de référence TR de la table T. Les sorties du circuit additionneur 6 délivrent des informations binaires concernant la somme

$TR + (\underline{i} \times \underline{t}) + \underline{d}$. Ces informations binaires sont enregistrées dans un registre RA d'adresses réelles ; tous les registres du dispositif sont bien entendu des registres binaires. Les sorties du registre RA sont reliées aux entrées d'un circuit 7 commandant l'adressage de la mémoire M. L'adressage de l'élément E est ainsi réalisé, puisque le circuit de commande d'adressage 7 reçoit : l'adresse de l'entrée de référence TR de la table T, le produit $\underline{i} \times \underline{t}$, qui comme on le verra par la suite, donne l'adresse de l'entrée dans laquelle est contenu l'élément E par rapport à l'entrée de référence TR, et l'offset $\underline{d}$ qui donne le décalage de l'élément E par rapport au début de l'entrée considérée.

Le circuit multiplieur 2 est un circuit décaleur dont on va expliquer le fonctionnement. Un circuit décaleur de ce type est décrit dans le brevet américain n° 3 967 101, et sa structure ne sera pas décrite en détail. Ce circuit agit de la manière suivante : la taille $\underline{t}$ qui représente le nombre de mots d'informations enregistrés en regard de chaque entrée de la table est exprimée sous la forme $\underline{t} = 2^n$ .

Dans l'exemple décrit, la taille $\underline{t}$ des entrées de la table est de 8 octets, et il en résulte que $\underline{n} = 3$. Ce nombre $\underline{n}$ est exprimé sous forme binaire par certaines des informations TBSZ contenues dans l'un des registres de la table J, dont l'adresse a été sélectionnée par les informations $TP_0$ par exemple. Le nombre $\underline{i}$ qui désigne l'index ou rang de l'entrée recherchée, par rapport à l'entrée de référence d'adresse TR, est contenu sous forme binaire dans les informations IDX enregistrées dans l'un des registres de la table TIDX.

Dans l'exemple considéré, l'élément E se trouve en regard de l'entrée $i_2$ de rang 2. Il en résulte qu'effectuer le

produit $i \times t$, dans l'exemple considéré, revient à effectuer l'opération $2 \times 8 = 16$ qui, en code binaire, s'exprime sous la forme 1,0, 0, 0, 0. Le rang $i = 2$ s'exprime sous forme binaire : 0, 1, 0. Le produit $i \times t = 16$ s'exprime sous la forme 1, 0, 0, 0, 0 en code binaire et cette opération revient à décaler de trois bits vers la gauche tous les bits contenus dans l'expression binaire 0, 1, 0 du rang $i = 2$ de l'entrée $i_2$. La valeur de ce décalage correspond à la valeur de $n$ contenue dans l'expression de la taille $t = 2^n$ des entrées de la table T.

Dans l'exemple considéré, $n = 3$, ce qui correspond bien à un décalage de trois bits vers la gauche. L'adresse de l'entrée dans laquelle est contenu l'élément E est donc l'adresse 16 par rapport à l'entrée de référence TR.

Si la table présentait des entrées de dimension $t = 2^n = 4$, on aurait $n = 2$ et, si comme précédemment, $i = 2$, l'entrée contenant l'élément E aurait pour adresse $4 \times 2 = 8$. Dans cette opération, pour obtenir le produit $i \times t = 8$, il suffit de décaler de $n = 2$ rangs vers la gauche l'expression binaire de $i = 2$. Ce décalage permet d'obtenir une expression binaire correspondant à la valeur 8. En fait, le circuit multiplieur 2 est un décaleur logarithmique qui décale l'expression binaire du rang $i$ d'un nombre de bits égal à $\log_2 t^n = n\log_2 t$, ce qui revient à décaler de $n$ bits vers la gauche l'expression binaire de $i$, puisque $t = 2$. Multiplier par $2^n$ en opération binaire revient en effet à décaler de $n$ rangs vers la gauche l'expression binaire du nombre qui est multiplié par $2^n$. Il en résulte que dans les informations TBSZ, il suffit de prévoir l'expression binaire de $n$ pour pouvoir effectuer par la suite le produit $i \times t$, grâce au décaleur 2. Ce décaleur permet en outre, de manière connue, d'additionner la valeur $d$ de l'offset, au produit $i \times t$, par simple décalage.

Le dispositif comprend aussi un registre BAR qui contient des adresses de limites de zones de la mémoire M ; dans l'exemple considéré, le registre BAR contient l'adresse de la limite BA qui divise la mémoire M en deux zones $M_1$, $M_2$ qui, comme on l'a vu plus haut, peuvent être réservées respectivement à la mémorisation d'informations invisibles ou visibles du logiciel. L'élément à adresser E, occupe une position relative prédéterminée par rapport à la limite BA de la zone dans laquelle il est inscrit.

Dans l'exemple considéré, l'élément E est au-dessus de la limite BA ; dans la zone $M_1$ cette position relative prédéterminée de l'élément E par rapport à la limite BA peut être repérée par des informations binaires contenues dans les informations TBSZ du registre sélectionné dans la table J ; ces informations indiquent si l'entrée en regard de laquelle se trouve l'élément E est située au-dessus ou en dessous de la limite de zones BA. En fait, ces informations indiquent essentiellement si l'adresse ou le rang de l'entrée concernée est inférieure ou supérieure à l'adresse de limite de zones contenue dans le registre de limite de zones BAR. Le dispositif comprend aussi un comparateur à seuil 8 qui permet de comparer le contenu du registre d'adresses réelles RA avec le contenu du registre d'adresses de limites de zones BAR ; ce comparateur reçoit en outre, en provenance du registre concerné dans la table J, une partie des informations binaires TBSZ concernant la position relative de l'élément E dans la table T, par rapport à la limite BA de la zone dans laquelle il est inscrit. Ce comparateur délivre un signal d'erreur sur une sortie 10, lorsque la différence entre l'adresse réelle de l'élément E et l'adresse BAR de limite de zones BA ne correspond pas aux informations concernant la position relative de l'élément E par rapport à la limite de la zone de mémoire dans laquelle cet élément est inscrit.

REVENDICATIONS

1. Dispositif d'adressage d'éléments d'informations dans une table à plusieurs entrées, enregistrée dans une mémoire, caractérisé en ce qu'il comprend des moyens d'enregistrement (J) de pointeurs (PTR) désignant des entrées de référence (TR) de la table (T) et d'enregistrement (TBSZ) de la taille $t$ représentant le nombre de multiplets d'informations enregistrés en regard de chaque entrée de la table, des moyens d'enregistrement (TIDX) du rang $i$ qu'occupe l'entrée contenant l'élément (E) à adresser par rapport à une entrée de référence (TR), $i$ et $t$ étant des entiers, des moyens d'enregistrement (TPA, RD), permettant de sélectionner respectivement d'une part, les moyens d'enregistrement (J) de pointeurs (PTR) et de taille $t$ (PTR, TBSZ) et d'autre part les moyens d'enregistrement (TIDX) du rang $i$ de l'entrée à adresser par rapport à l'entrée de référence (TR), et des moyens pour adresser ledit élément (E) à partir de l'entrée de référence (TR), de la taille $t$ du rang $i$ et de la valeur de la position $d$ dudit élément par rapport au début de l'entrée contenant ledit élément, la valeur de la position $d$ provenant d'un mot de microprogramme contenu dans les moyens d'enregistrement (RD) qui permettent de sélectionner les moyens d'enregistrement (TIDX) du rang $i$ de l'entrée à adresser.

2. Dispositif selon la revendication 1, caractérisé en ce que les moyens pour adresser ledit élément (E) comprennent un circuit multiplieur (2) dont les entrées sont reliées à des sorties des moyens d'enregistrement (J - TBSZ) de la taille $t$ des entrées de la table, à des sorties des moyens d'enregistrement (TIDX) du rang $i$ et de la position $d$ de l'entrée contenant l'élément à adresser et à des sorties des moyens d'enregistrement (RD) de la taille $t$, un circuit additionneur (6) dont les entrées sont connectées à des sorties du circuit multiplieur (2) et à des sorties des moyens d'enregistrement (J) du pointeur sur l'entrée de référence (TR) de la table et un registre (RA) d'adresses réelles dont les entrées sont reliées aux sorties du circuit additionneur (6) et dont les sorties commandent un circuit d'adressage (7) de la mémoire (M).

3. Dispositif selon la revendication 2, caractérisé en ce que les moyens d'enregistrement (TIDX), (J) du rang $i$ et de la taille $t$ sont constitués par des registres binaires.

4. Dispositif selon la revendication 3, caractérisé en ce que la taille $t$ des entrées de la table (T) étant de la forme $t = 2^n$, $n$ désignant un nombre entier fixe pour une table donnée, le circuit multiplieur (2) est un circuit décaleur apte à décaler de $n$ rangs vers la gauche le contenu du registre contenant sous forme binaire la valeur du rang $i$ de l'entrée correspondant à l'élément à adresser.

5. Dispositif selon la revendication 4, caractérisé en ce qu'il comprend en outre un registre (BAR) d'adresses de limites de zones ($M_1$, $M_2$) de mémoire (M), chaque élément à adresser occupant dans la mémoire une position relative prédéterminée par rapport à une limite (BA) de la zone dans laquelle il est inscrit, et un comparateur à seuil (8) pour comparer le contenu du registre (RA) d'adresses réelles avec le contenu du registre (BAR) d'adresses de limites de zones, ce comparateur recevant en outre, en provenance des moyens d'enregistrement (J), des informations binaires concernant la position relative de l'élément (E) dans la table (T) par rapport à la limite (BA) de la zone de mémoire dans laquelle il est inscrit, de sorte qu'un signal d'erreur apparaît en sortie de ce comparateur lorsque la différence entre l'adresse réelle de l'élément de la table et l'adresse (BAR) de limite de zones (BA) ne correspond pas aux informations concernant la position relative de l'élément (E) par rapport à la limite de zones de mémoire dans laquelle il est inscrit.

6. Dispositif selon la revendication 4, caractérisé en ce que les registres des moyens d'enregistrement (J - TBSZ) contenant les valeurs binaires représentatives de la taille $t$ de chaque entrée contiennent en outre des valeurs binaires représentatives du nombre maximal d'entrées de la table, un autre comparateur à seuil (9) étant relié par ses entrées, d'une part aux sorties de ces registres et, d'autre part, aux sorties de registres des moyens d'enregistrement (TIDX) qui contiennent les valeurs binaires représentatives du rang $i$, de sorte qu'un signal d'erreur apparaît en sortie du comparateur lorsque le valeur du rang $i$ dépasse le nombre maximal d'entrées de la table (T).

7. Dispositif selon la revendication 5, caractérisé en ce que les informations binaires concernant la position relative de la table par rapport à la limite de la zone de la mémoire dans laquelle elle est inscrite sont enregistrées dans les registres des moyens d'enregistrement (J - TBSZ) contenant les valeurs binaires représentatives de la taille des entrées de la table.

8. Application du dispositif conforme à l'une quelconque des revendications 1 à 7, à l'adressage d'éléments d'informations dans des tables contenues dans la mémoire centrale d'une unité de traitement de l'information.

0032075

6812

**Office européen des brevets**

**RAPPORT DE RECHERCHE EUROPEENNE**

EP 80 40 1741

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | G 06 F 13/00 |
| X | <u>GB - A - 1 177 021</u> (ERICSSON)<br><br>* Page 3, ligne 113 à page 4, ligne 88 et revendication 1 et figures 1-4 *<br><br>--- | 1-4,8 | |
| | <u>US - A - 3 828 316</u> (CARD)<br><br>* Colonne 15, ligne 23 à colonne 17, ligne 64 *<br><br>--- | 1,5,6 | |
| | <u>US - A - 3 771 146</u> (COTTON)<br><br>* Colonne 8, ligne 62 à colonne 9, ligne 4; colonne 11, lignes 6-20; figures 2a,2b, 4,5 *<br><br>-------- | 6 | **DOMAINES TECHNIQUES RECHERCHES (Int. Cl. 3)**<br><br>G 06 F 13/00 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 01.04.1981 | WEBER |

**OEB Form 1503.1   06.78**